# EUROPEAN PATENT SPECIFICATION

(11) **EP 3 268 625 B1**
(45) Date of publication and mention of the grant of the patent: **29.05.2019**
(21) Application number: 16715879.9
(22) Date of filing: 23.02.2016
(51) Int. Cl.: F16C 11/06, F16C 41/00, B62D 7/18, B60B 35/00

(54) **BALL JOINT ASSEMBLY WITH A ROTATION SENSOR DEVICE**
KUGELGELENKANORDNUNG MIT DREHBEWEGUNGSSENSOR
ENSEMBLE DE JOINT À ROTULE AVEC DISPOSITIF DE DÉTECTION DE ROTATION

(30) Priority: 13.03.2015 IT BG20150016
(43) Date of publication of application: 17.01.2018
(73) Proprietor: SAME DEUTZ-FAHR ITALIA S.p.A., 24047 TREVIGLIO (BG) (IT)
(72) Inventor: HERAUDET, Laurent, 24047 Treviglio (Bergamo) (IT); STUCCHI, Luca, 24047 Treviglio (Bergamo) (IT)
(74) Representative: Gamba, Alessandro
(86) International application number: PCT/IB2016/050976
(87) International publication number: WO 2016/147068

(56) References cited:
- EP-A1- 0 048 553
- DE-A1- 1 425 344
- DE-A1-102012 013 568
- US-A1- 2011 170 943

## Description

### Field of application

The present invention relates to a joint group and a single-suspended-wheel steering system of a vehicle for agricultural use comprising said joint group.

### State of the art

In mechanics, and in general, in mechanical interactions, transformation systems of the motion have long been known of in which the motion is converted from a linear movement to a rotary movement; among the various solutions are connecting rod-crank systems or systems with a jack which controls the rotation of a shaft.

However, the components in it comprised in the mutual engagement, often as a result of geometric or mechanical problems, do not present a limited movement on a single axis; in fact, the mutual engagement between the various components is achieved by the use of spherical joints, which by definition allow the rotary movement with respect to its spherical end in the three axes.

Document US 2011 170 943 A discloses a joint set for pneumatic tools. The joint set comprises a hollow pin having a first end for connection to a first component and a second end which is spherical. The spherical end is accommodated in a ball seat.

The ball seat is mounted, with the interposition of a rotary bearing, to a housing body which is fixable to a second component. The rotary bearing is formed by a row of balls provided in grooves on the outer surface of the ball seat and on the inner surface of the housing body.

The main drawback in the use of spherical joints is that of not allowing a simple and effective assessment and detection of the rotation, and of the rotation angles, about the axes of the joint.

### Presentation of the invention

The purpose of the present invention is to provide a joint group in which it is possible to detect the main angle of rotation of the joint, i.e., a joint group in which the above-mentioned drawback typical of the prior art is overcome.

Such purpose is achieved by a joint group made according to claim 1; such purpose is also achieved for example in a single-suspended-wheel steering system of a vehicle according to claim 13. The dependent claims describe further preferred embodiments.

### Description of the drawings

The characteristics and advantages of the joint group according to the present invention will be evident from the description given below, by way of a nonlimiting example, according to the appended drawings, wherein:
- figure 1 shows a side view of a joint group of the present invention, according to a preferred embodiment;
- figure 1a shows a cross-section view of the joint group in figure 1, along the cross-section plane V-V;
- figure 1b is a view from above of the joint group in figure 1;

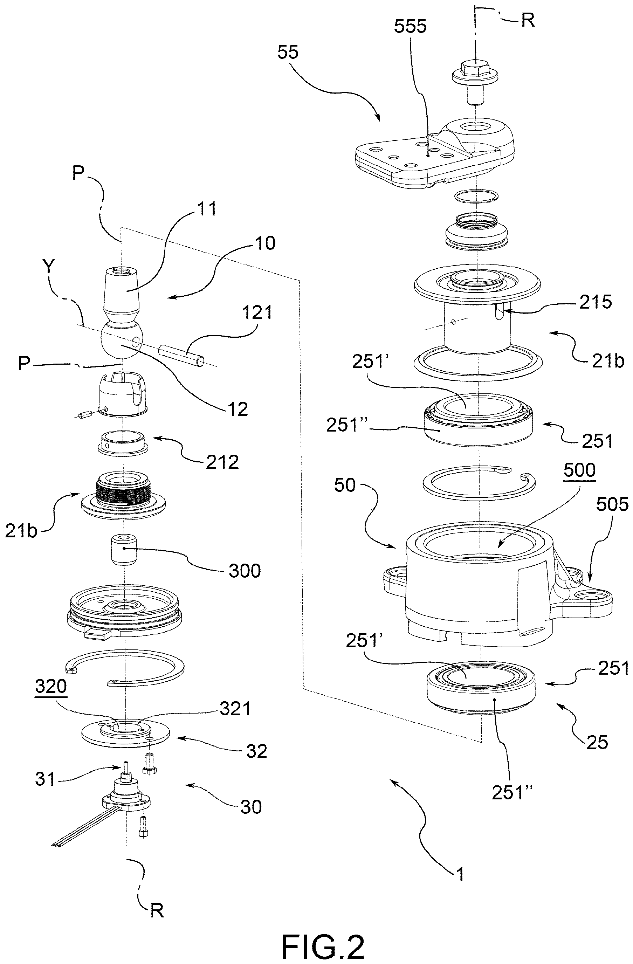

- figure 2 shows a perspective view in separate parts of the joint group in figure 1;

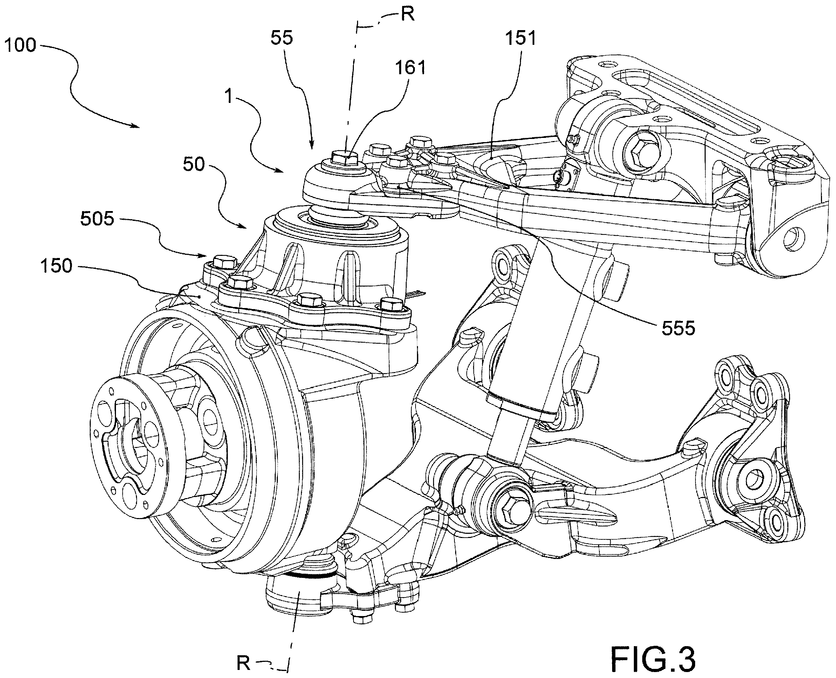

- figure 3 shows a perspective view of a single-suspended-wheel steering system comprising the joint group shown in the aforementioned drawings.

### Detailed description

With reference to the appended drawings, reference numeral 1 globally denotes a joint group in its entirety according to a preferred embodiment.

Preferably, the joint group is suitable for operatively connecting a first component and a second component. In particular, the joint group 1 is suitable to allow the movement of the first component with respect to the second component, wherein said movement is of the rotary type, preferably around an axis of rotation R-R. By means of the joint group 1 therefore the first component is suitable to rotate relative to the second component and / or vice versa.

It is to be noted that the present invention is not limited to the type of components connected to and from the joint group 1. Any component to which the joint group 1 is attachable to, is suitable to be operatively connected by this to another component, according to the description given below. For example, in one embodiment, the joint group 1 is operatively connected to a jack and to a shaft, in such a way that the movement of the jack causes the rotary movement of said shaft.

In a preferred embodiment, the joint group 1 according to the present invention finds application in a vehicle for agricultural use, for example a tractor. Preferably, it finds application in a single-suspended-wheel steering system 100 of the tractor, i.e. the support and control system of the rotation of a wheel assembly, or of a tyre. Preferably, the single-suspended-wheel steering system 100 is at the front of the vehicle for agricultural use. Preferably, the single-suspended-wheel steering system 100 is a drive wheel.

According to a preferred embodiment, the system 100 comprises a wheel-carrier 150 for the wheel group and at least one suspension arm 151 for the support and cushioning of the wheel group. The joint group 1 is therefore suitable to operatively connect said wheel carrier 150 to the suspension arm 151, according to the description below, respectively the first and the second component operatively connected by the joint group 1.

Preferably, the joint group 1 comprises a pin 10 that extends along a pivot axis P-P between a first end 11 and a second spherical end 12.

Preferably, the joint group 1 comprises a housing body 50 fixable to the second component and suitable to house the spherical end 12, according to the description below. In a preferred embodiment, the housing body 50 is provided with at least a fixing wall 505 on which the second component is suitable to be fixed, for example by means of screws-bolts.

According to a preferred embodiment, instead, the first end 11 is suitable to be fixed to the first component.

According to a preferred embodiment, the first end 11 is fixable to the first component which is, for example, screwed to it. Preferably, the first end 11 comprises a threaded cavity 111 in which a special locking screw 161 is screwable.

Preferably, the joint group 1 comprises a flange element 55 integrally connected to the first end 11, for example by means of a threaded coupling, for example being fitted on said first end 11 fixed by means of a special locking screw 161. Said flange element 55 comprises an assembly surface 555 to which the first component is suitable to be fixed.

According to a preferred embodiment, the joint group 1 comprises a rotation device 20 comprising a central body 21 in which is fitted and integrally connected the second spherical end 12 of the pin 10 and rotation means 25 suitable to allow the free rotation of the central body 21 around the axis of rotation R-R.

In other words, the housing body 50 comprises a housing cavity 500 preferably axial symmetric, which extends along the axis of rotation R-R. In this manner, the joint group 1 in its entirety is substantially contained in the housing cavity 500; in fact, only a portion of the pin 10 extends outside said housing cavity 500, in particular the first end 11.

Preferably, the central body 21 comprises a ball housing 210 delimited by housing walls 210', in which the second spherical end 12 is received.

According to a preferred embodiment, the second spherical end 12 is connected to the central body 21 by means of a transverse pin 121 which extends along a transverse axis Y-Y perpendicular to the axis of rotation R-R and passing from the centre C of the second spherical end 12. The pin 121 engages said housing walls 210' so that the pin 10 is free to rotate around said transverse axis Y-Y. In other words the pin 121 prevents the second spherical end 12 from freely rotating around the centre C in all degrees of freedom.

According to a preferred embodiment, the central body 21 has two pin slots 215 radially opposite with respect to the axis of rotation R-R. Preferably, the pin slots 215 are made on the housing walls 210' and extend parallel to the axis of rotation R-R. In said pin slots 215 the ends of the transverse pin 121 are housed, free to move.

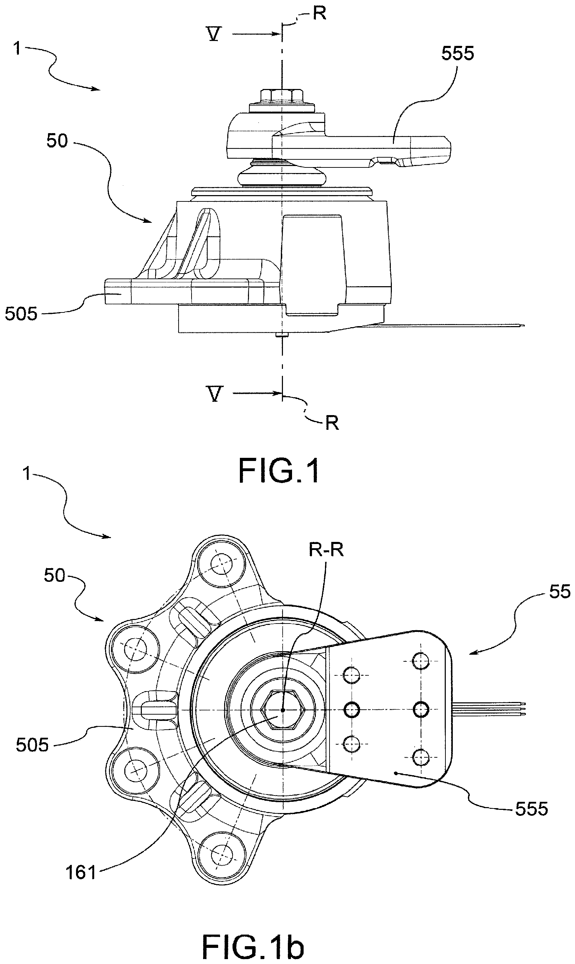

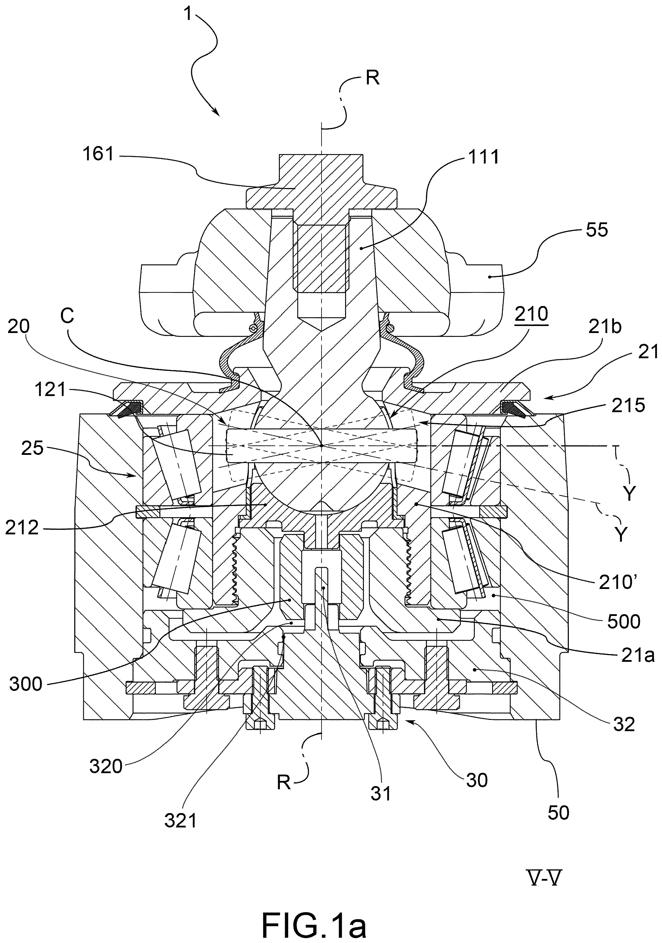

In other words, the two pin slots 215 allow movements of the pin 121 such as to recover, for example, shaking of the relative movement between first and second components and any assembly tolerances between the components. It is to be noted that the angular movement of the pin 121 in the slots 215 is represented in figure 1a by the dotted lines.

In addition, preferably, the central body 21 comprises an abutment element 212 suitable to keep the centre C fixed along the axis of rotation R-R. In other words, the central body 21 has inside it an abutment element 212 on which the second spherical end 12 acts, free to move the abutment element 212 has in fact a concave shape such as to allow the housing and the support of a portion of the second spherical end 12. Preferably, the curvature of said concave portion has the same radius as the second spherical end 12; in other words its radius is equal to the distance from the centre C of the outer wall of the second spherical end 12.

According to a preferred embodiment, the abutment element 212 is in an anti-friction material, i.e. with a low friction coefficient, preferably, a material selected from the group of polymers or metals having a low friction coefficient or low-friction, such as bronze alloys.

According to a preferred embodiment, the rotation means 25 comprise one or more bearings 251, having the inner surface 251' operatively connected to the central body 21 and the outer surface 251" operatively connected to the component in which the rotation device 20 is housed.

In a preferred embodiment, the rotation means 25 comprise two tapered roller bearings 251 arranged in such a way that the available angles of the cones are opposite and facing the centre of the joint group 1 where the second spherical end 12 is preferably placed. Embodiments are however known in which the rotation means 25 comprise one or more ball or sliding bearings.

In other words, the rotation means 25 are suitable to manage both the axial loads and radial loads.

According to a preferred embodiment, the central body 21 consists of two main portions.

Preferably, the central body 21 comprises a first portion 21a and a second portion 21b suitable to engage each other along the axis of rotation R-R in such a way as to delimit the ball housing 210. In other words, along the vertical, the first portion 21a and second portion 21b are adapted to engage each other, for example by screwing to one another. Preferably, the first portion 21a and second portion 21b are flanged radially in such a way as to sandwich the rotation means 25 between the respective flanges.

According to a preferred embodiment, the joint group further comprises a rotation sensor device 30 suitable for detecting the angle of rotation of the central body 21 around said rotation axis R-R; in other words, the rotation sensor device 30 is suitable to detect the angle of rotation of the second component.

Depending on the various embodiments, the rotation sensor device 30 is fixed to the housing body 50.

Preferably, the rotation sensor device 30 comprises a detection element 31 positioned on the axis of rotation R-R.

In a preferred embodiment, the rotation sensor device 30 comprises a flange 32 for fixing the rotation sensor device 30 to the housing body 50.

Preferably, the flange 32 has along the rotation axis R-R, a detection aperture 320 through which the detection element 31 is inserted to interface with the central body 21.

In a preferred embodiment, the detection element 31 interfaces with the second portion 21b.

Preferably, the flange 32 has, along the axis of rotation R-R, a seat 321 for housing the detection element 31, wherein said seat 321 is in communication with the detection aperture 320.

According to a preferred embodiment, the detection element 31 is suitable for detecting angles of rotation around the axis of rotation R-R of the central body 21, starting from a zero position, up to ±90°, preferably up to ±60°.

Depending on the type of configuration therefore, the detection element 31 is suitable to detect a rotation of the central body 21, for example induced by the pin 10 through the pin 121, with respect to the flange 320. Conversely, in other embodiments, the central body 21 is kept in a fixed position by the pin 10, by means of the pin 121, and it is the housing body 50 and thus the flange 320 fixed to it which are rotated: the detection element 31 is suitable to detect the relative rotation of the central body 21 with respect to these.

In a preferred embodiment, the rotation sensor device 30 also comprises a realignment sleeve 300, suitable to recover any misalignments of the sensor with respect to the axis of rotation R-R, for example related to assembly tolerances. In other words, the detection element 31 is suitable to detect the relative movement of said sleeve 300 induced by the main body 21 to which the sleeve 300 is fixed.

In a preferred embodiment, the realignment sleeve 300 is made of an elastically yielding material, for example a polymeric rubber material.

Innovatively, the joint group of the present invention makes it possible to achieve the intended purpose of the invention, i.e. to provide a precise detection of the angle of relative rotation between two operatively connected components.

Advantageously, the joint group is suitable to perform the detection of the angle of rotation about the axis of rotation continuing to ensure the coupling with three degrees of freedom needed in these embodiments.

Moreover, advantageously, the detection is always reliable and correct in real time being taken with respect to the central body, without, instead, being conditioned by the movements of the rotary joint.

A further advantage is that of having a coupling group in which the three axes of movement are isolated from each other and thus the rotations around them are effectively measurable. Advantageously therefore the movement around one axis does not affect that around the other axes.

Yet a further advantage lies in the fact that the joint group is rigid and sturdy, and therefore suitable to be used in hostile and demanding environments such as those related to mechanical applications.

Moreover, advantageously, the joint group is not particularly cumbersome and can be fitted to a plurality of mutually different components.

Advantageously, the joint group is suitable to find application in various mechanical applications, such as on a single-suspended-wheel steering system.

Furthermore, the joint group is advantageously suitable in various mechanical applications in which two generic components must be placed in a relative rotary movement operatively connected to each other, in other words the joint group is suitable to replace the use of ball joints continuing to ensure the three degrees of freedom; advantageously, the joint group is also applicable in connecting rod-crank systems or is applicable to join a jack to a rotation shaft.

It is clear that a person skilled in the art may make modifications to the joint group so as to satisfy contingent requirements ,all contained within the scope of protection as defined by the following claims.

## Claims

1. Joint group (1) suitable for operatively connecting a first component (151) and a second component (150) in such a way as to allow reciprocal rotary movement around an axis of rotation (R-R), and comprising:
i) a pin (10) that extends along a pivot axis (P-P) between a first end (11) fixable to the first component (151) and a second spherical end (12);
ii) a rotation device (20) comprising a central body (21) in which is fitted and integrally connected the second spherical end (12) of the pin (10) and rotation means (25) suitable to allow the free rotation of the central body (21) around the axis of rotation (R-R);
iii) a rotation sensor device (30) comprising a detection element (31) positioned on the axis of rotation (R-R) and suitable to detect the angle of rotation of the central body (21) around said axis of rotation (R-R);
iv) a housing body (50) fixable to the second component (150), wherein the housing body (50) houses the rotation device (20) and the rotation sensor device (30), and wherein the first end (11) of the pin (10) protrudes from the housing body (50) to engage the first component (151).

2. Joint group (1) according to claim 1, wherein the central body (21) comprises a ball housing (210) delimited by housing walls (210'), wherein the second spherical end (12) is connected to the central body (21) by means of a transverse pin (121) which extends along a transverse axis (Y-Y) perpendicular to the axis of rotation (R-R) and passing from the centre (C) of the second spherical end (12) to engage said housing walls (210'), in such a way that the pin (10) is free to rotate about said transverse axis (Y-Y).

3. Joint group (1) according to claim 2, wherein the central body (21) has, radially opposite with respect to the axis of rotation (R-R), on the housing walls (210'), two pin slots (215) that extend parallel the axis of rotation (R-R), in which the ends of the transverse pin (121) are housed, free to move.

4. Joint group (1) according to any of claims 2 or 3, wherein the central body (21) comprises an abutment element (212) suitable to keep the centre (C) fixed along the axis of rotation (R-R).

5. Joint group (1) according to any of the preceding claims, wherein the rotation means (25) comprise one or more bearings (251), having the inner surface (251') operatively connected to the central body (21) and the outer surface (251") operatively connected to the housing body (50).

6. Joint group (1) according to any of the preceding claims, wherein the central body (21) comprises a first portion (21a) and a second upper portion (21b) suitable to engage each other along the axis of rotation (R-R), in such a way as to delimit the ball housing (210).

7. Joint group (1) according to any of the preceding claims, wherein the rotation sensor device (30) comprises a flange (32) for fixing the rotation sensor device (30), in which the flange (32) has, along the axis of rotation (R-R), a detector aperture (320) through which is inserted the detection element (31) to interface with the central body (21), preferably with a second portion (21b) .

8. Joint group (1) according to claim 7, wherein the flange (32) has, along the axis of rotation (R-R), a seat (321) for housing the detection element (31), wherein said seat (321) is in communication with the detection aperture (320).

9. Joint group (1) according with any of claims 7 or 8, wherein the detection element (31) is suitable for detecting angles of rotation around the axis of rotation (R-R), starting from a zero position, up to ±90°, preferably up to ±60°.

10. Joint group (1) in accordance with any one of the preceding claims, wherein the housing body (50) has, along the axis of rotation (R-R), an axially symmetric cavity (500).

11. Joint group (1) according to any of claims 7 to 9, in combination with claim 10, wherein the flange (32) and rotation means (25) are suitable to support the central body (21) and the pin (10) on the housing body (50).

12. Joint group (1) according to any of the preceding claims, comprising a flange (55) integrally connected to the first end (11) of the pin (10) suitable to be fixed to the first component (151).

13. A single-suspended-wheel steering system (100) comprising a wheel carrier (150), a suspension arm (151) and a joint group (1) according to any of the preceding claims, connecting the wheel carrier (150) to the suspension arm (151).

## Patentansprüche

1. Verbindungsgruppe (1), welche zum Wirkverbinden einer ersten Komponente (151) und einer zweiten Komponente (150) in solch einer Weise eingerichtet ist, dass sie eine wechselseitige Drehbewegung um eine Drehachse (R-R) erlaubt, und welche umfasst:
i) einen Bolzen (10), welcher sich entlang einer Schwenkachse (P-P) zwischen einem an der erste Komponente (151) befestigbaren ersten Ende (11) und einem zweiten kugelförmigen Ende (12) erstreckt;
ii) eine Drehvorrichtung (20), welche einen zentralen Körper (21), in welchem das zweite kugelförmige Ende (12) des Bolzens (10) eingepasst und integral verbunden ist, und ein Drehmittel (25) umfasst, welches dazu eingerichtet ist, die freie Drehung des zentralen Körpers (21) um die Drehachse (R-R) zu erlauben;
iii) eine Drehsensorvorrichtung (30), welche ein Erfassungselement (31) umfasst, welches an der Drehachse (R-R) positioniert und dazu eingerichtet ist, den Drehwinkel des zentralen Körpers (21) um die Drehachse (R-R) zu erfassen;
iv) einen Aufnahmekörper (50), welcher an der zweiten Komponente (150) befestigbar ist, wobei der Aufnahmekörper (50) die Drehvorrichtung (20) und die Drehsensorvorrichtung (30) aufnimmt, und wobei das erste Ende (11) des Bolzens (10) von dem Aufnahmekörper (50) hervorsteht, um mit der ersten Komponente (151) in Eingriff zu stehen.

2. Verbindungsgruppe (1) nach Anspruch 1, wobei der zentrale Körper (21) eine Kugelaufnahme (210) umfasst, welche durch Aufnahmewände (210') beschränkt ist, wobei das zweite kugelförmige Ende (12) mit dem zentralen Körper (21) mittels eines quer verlaufenden Bolzens (121) verbunden ist, welcher sich entlang einer quer verlaufenden Achse (Y-Y) erstreckt, welche lotrecht zu der Drehachse (R-R) ist, und welcher zum Eingreifen in die Aufnahmewände (210') das Zentrum (C) des zweiten kugelförmigen Endes (12) in solch einer Weise durchläuft, dass der Bolzen (10) frei ist, sich um die quer verlaufende Achse (Y-Y) zu drehen.

3. Verbindungsgruppe (1) nach Anspruch 2, wobei der zentrale Körper (21) an den Aufnahmewänden (210') zwei in Bezug auf die Drehachse (R-R) radial entgegengesetzte Bolzenaussparungen (215), welche sich parallel zu der Drehachse (R-R) erstrecken, aufweist, in welchen die Enden des quer verlaufenden Bolzens (121) derart aufgenommen sind, dass sie sich frei bewegen.

4. Verbindungsgruppe (1) nach einem der Ansprüche 2 oder 3, wobei der zentrale Körper (21) ein Anlageelement (212) umfasst, welches dazu eingerichtet ist, das Zentrum (C) entlang der Drehachse (R-R) befestigt zu halten.

5. Verbindungsgruppe (1) nach einem der vorhergehenden Ansprüche, wobei das Drehmittel (25) einen oder mehrere Lagerungen (251) umfasst, bei welchen die innere Fläche (251') mit dem zentralen Körper (21) wirkverbunden ist und die äußere Fläche (251") mit dem Aufnahmekörper (50) wirkverbunden ist.

6. Verbindungsgruppe (1) nach einem der vorhergehenden Ansprüche, wobei der zentrale Körper (21) einen ersten Abschnitt (21a) und einen zweiten oberen Abschnitt (21b) umfasst, welche dazu eingerichtet sind, entlang der Drehachse (R-R) in solch einer Weise miteinander in Eingriff zu stehen, dass sie die Kugelaufnahme (210) beschränken.

7. Verbindungsgruppe (1) nach einem der vorhergehenden Ansprüche, wobei die Drehsensorvorrichtung (30) einen Flansch (32) zum Befestigen der Drehsensorvorrichtung (30) umfasst, wobei der Flansch (32) entlang der Drehachse (R-R) eine Erfassungsöffnung (320) aufweist, durch welche das Erfassungselement (31) eingesetzt ist, um mit dem zentralen Körper (21), vorzugsweise mit einem zweiten Abschnitt (21b), eine Schnittstelle zu bilden.

8. Verbindungsgruppe (1) nach Anspruch 7, wobei der Flansch (32) entlang der Drehachse (R-R) einen Sitz (321) zum Aufnehmen des Erfassungselements (31) aufweist, wobei der Sitz (321) in Kommunikation mit der Erfassungsöffnung (320) ist.

9. Verbindungsgruppe (1) nach einem der Ansprüche 7 oder 8, wobei das Erfassungselement (31) zum Erfassen von Drehwinkeln um die Drehachse (R-R), beginnend von einer Nullposition bis zu ± 90°, vorzugsweise bis zu ± 60°, eingerichtet ist.

10. Verbindungsgruppe (1) nach einem der vorhergehenden Ansprüche, wobei der Aufnahmekörper (50) entlang der Drehachse (R-R) eine axialsymmetrische Kavität (500) aufweist.

11. Verbindungsgruppe (1) nach einem der Ansprüche 7 bis 9, in Kombination mit Anspruch 10, wobei der Flansch (32) und das Drehmittel (25) zum Haltern des zentralen Körpers (21) und des Bolzens (10) an dem Aufnahmekörper (50) eingerichtet sind.

12. Verbindungsgruppe (1) nach einem der vorhergehenden Ansprüche, umfassend einen Flansch (55), welcher mit dem ersten Ende (11) des Bolzens (10) integral verbunden ist, welcher dazu eingerichtet ist, an der ersten Komponente (151) befestigt zu sein.

13. Lenksystem (100) mit einem einzeln aufgehängten Rad, welches einen Radträger (150), einen Aufhängungsarm (151) und eine Verbindungsgruppe (1) nach einem der vorhergehenden Ansprüche umfasst, welche den Radträger (150) mit dem Aufhängungsarm (151) verbindet.

## Revendications

1. Ensemble de joint (1) apte à relier de manière fonctionnelle un premier composant (151) et un second composant (150) de façon à permettre un mouvement rotatif réciproque autour d'un axe de rotation (R-R), et comprenant :
i) un axe (10) qui s'étend le long d'un axe de pivotement (P-P) entre une première extrémité (11) pouvant être fixée au premier composant (151) et une seconde extrémité sphérique (12) ;
ii) un dispositif de rotation (20) comprenant un corps central (21) dans lequel est montée et intégralement connectée la seconde extrémité sphérique (12) de l'axe (10), et des moyens de rotation (25) aptes à permettre la libre rotation du corps central (21) autour de l'axe de rotation (R-R) ;
iii) un dispositif capteur de rotation (30) comprenant un élément de détection (31) positionné sur l'axe de rotation (R-R) et apte à détecter l'angle de rotation du corps central (21) autour dudit axe de rotation (R-R) ;
iv) un corps de logement (50) pouvant être fixé au second composant (150), dans lequel le corps de logement (50) reçoit le dispositif de rotation (20) et le dispositif capteur de rotation (30), et dans lequel la première extrémité (11) de l'axe (10) fait saillie du corps de logement (50) pour venir en prise avec le premier composant (151).

2. Ensemble de joint (1) selon la revendication 1, dans lequel le corps central (21) comprend un logement de rotule (210) délimité par des parois de logement (210'), dans lequel la seconde extrémité sphérique (12) est reliée au corps central (21) au moyen d'un axe transversal (121) qui s'étend le long d'un axe transversal (Y-Y) perpendiculaire à l'axe de rotation (R-R) et passant par le centre (C) de la seconde extrémité sphérique (12) pour venir en prise avec lesdites parois de logement (210') de façon telle que l'axe (10) est libre de tourner autour dudit axe transversal (Y-Y).

3. Ensemble de joint (1) selon la revendication 2, dans lequel le corps central (21) présente, de façon radialement opposée par rapport à l'axe de rotation (R-R), sur les parois de logement (210'), deux encoches de passage d'axes (215) qui s'étendent parallèlement à l'axe de rotation (R-R), dans lesquelles sont logées les extrémités de l'axe transversal (121), libres de mouvement.

4. Ensemble de joint (1) selon l'une quelconque des revendications 2 ou 3, dans lequel le corps central (21) comprend un élément de butée (212) apte à maintenir le centre (C) fixe le long de l'axe de rotation (R-R).

5. Ensemble de joint (1) selon l'une quelconque des revendications précédentes, dans lequel les moyens de rotation (25) comprennent un ou plusieurs roulements (251) dont la surface intérieure (251') est reliée de manière fonctionnelle au corps central (21) et dont la surface extérieure (251") est reliée de manière fonctionnelle au corps de logement (50).

6. Ensemble de joint (1) selon l'une quelconque des revendications précédentes, dans lequel le corps central (21) comprend une première partie (21a) et une seconde partie supérieure (21b) aptes à venir en prise mutuellement le long de l'axe de rotation (R-R), de façon à délimiter le logement de rotule (210).

7. Ensemble de joint (1) selon l'une quelconque des revendications précédentes, dans lequel le dispositif capteur de rotation (30) comprend une bride (32) destinée à fixer le dispositif capteur de rotation (30), dans lequel la bride (32) présente, le long de l'axe de rotation (R-R), une ouverture de détecteur (320) à travers laquelle est inséré l'élément de détection (31) pour s'interfacer avec le corps central (21), de préférence avec une seconde partie (21b).

8. Ensemble de joint (1) selon la revendication 7, dans lequel la bride (32) présente, le long de l'axe de rotation (R-R), un logement (321) pour recevoir l'élément de détection (31), ledit logement (321) étant en communication avec l'ouverture de détection (320).

9. Ensemble de joint (1) selon l'une quelconque des revendications 7 ou 8, dans lequel l'élément de détection (31) est apte à détecter des angles de rotation autour de l'axe de rotation (R-R), à partir d'une position zéro jusqu'à ± 90°, de préférence jusqu'à ± 60°.

10. Ensemble de joint (1) selon l'une quelconque des revendications précédentes, dans lequel le corps de logement (50) présente, le long de l'axe de rotation (R-R), une cavité axialement symétrique (500).

11. Ensemble de joint (1) selon l'une quelconque des revendications 7 à 9, en combinaison avec la revendication 10, dans lequel la bride (32) et les moyens de rotation (25) sont aptes à supporter le corps central (21) et l'axe (10) sur le corps de logement (50).

12. Ensemble de joint (1) selon l'une quelconque des revendications précédentes, comprenant une bride (55) intégralement connectée à la première extrémité (11) de l'axe (10) apte à être fixé au premier composant (151).

13. Système de direction à roue à suspension individuelle (100) comprenant un porte-roue (150), un bras de suspension (151) et un ensemble de joint (1) selon l'une quelconque des revendications précédentes, reliant le porte-roue (150) au bras de suspension (151).
